# EUROPÄISCHE PATENTSCHRIFT

(11) **EP 0 841 307 B1**
(45) Veröffentlichungstag und Bekanntmachung des Hinweises auf die Patenterteilung: **27.06.2001**
(21) Anmeldenummer: 97402482.0
(22) Anmeldetag: 20.10.1997
(51) Int. Cl.: C03C 25/10

(54) **Vorrichtung zum Aufbringen eines Beschichtungsmaterials auf eine optische Faser**
Apparatus for depositing a coating material on an optical fibre
Dispositif de dépôt d'un matériau de revêtement sur une fibre optique

(30) Priorität: 12.11.1996 DE 19646623
(43) Veröffentlichungstag der Anmeldung: 13.05.1998
(73) Patentinhaber: ALCATEL, 75008 Paris (FR)
(72) Erfinder: Rosenkranz, Jürgen, Dr., 41068 Mönchengladbach (DE); Reiners, Wilhelm, Dr., 41844 Wegberg (DE); Bartling, Franz-Peter, 40221 Düsseldorf (DE)
(74) Vertreter: Rausch, Gabriele, Dr.

(56) Entgegenhaltungen:
- EP-A- 0 462 951
- DE-A- 4 434 147

## Beschreibung

Die Erfindung betrifft eine Vorrichtung zum Aufbringen eines Beschichtungsmaterials auf eine optische Faser mit einem Düsenhalter, einer in dem Düsenhalter angeordneten Beschichtungsdüse, einer in Durchlaufrichtung der Faser vor der Beschichtungsdüse vorgesehenen Beschichtungskammer sowie zumindest einem mit der Beschichtungskammer in Verbindung stehenden Einlaßkanal für ein Beschichtungsmaterial.

Eine solche Vorrichtung zum Aufbringen eines Beschichtungsmaterials wird beispielsweise bei der Herstellung einer aus einer Glasvorform, einer sogenannten Preform, gezogenen optischen Glasfaser für die Nachrichtenübertragung verwendet. Bereits die Führung der Glasfaser über Umlenkrollen macht es erforderlich, die Glasfaser mit einer Beschichtung zu versehen, um sie so vor Beschädigungen durch unzulässig hohe mechanische Beanspruchungen zu schützen. Zu diesem Zweck wird die optische Glasfaser mit einer oder mehreren Schichten beispielsweise eines polymeren Materials überzogen, wobei beim Aufbringen mehrerer Schichten diese sich regelmäßig in ihren mechanischen Eigenschaften unterscheiden. Die äußere Schicht der Beschichtung der optischen Faser dient zudem in der Regel zur Kennzeichnung der optischen Faser, um einzelne Fasern aus einer Vielzahl von Fasern heraus identifizieren zu können.

Es ist daher üblich, bei Vorrichtungen zum Aufbringen von Beschichtungsmaterial auf optische Fasern zwölf oder mehr verschiedenfarbige Beschichtungsmaterialien zu verwenden. Da die bekannten Beschichtungsvorrichtungen nur eine Zuführung für das auf die optische Faser aufzubringende Beschichtungsmaterial aufweisen, ist bei einem Farbwechsel ein Austausch des Vorratsbehälters mit der Zuleitung zur Vorrichtung sowie eine komplette Reinigung der Beschichtungsvorrichtung notwendig. Um entsprechend lange Stand- und Umrüstzeiten der Beschichtungsvorrichtung zu vermeiden, ist es möglich, zwei oder mehr identische Vorrichtungen zum Aufbringen von verschiedenfarbigen Beschichtungsmaterialien hintereinander in einer Linie anzuordnen, wobei jede dieser Vorrichtungen zum Aufbringen genau einer Farbe dient. Eine solche Anordnung erfordert allerdings einen großen Platzbedarf in der Fertigungslinie. Zudem werden die zusätzlichen Vorrichtungen zum Aufbringen von Beschichtungsmaterial nur wenig genutzt. Muß die Fertigungslinie auf andersfarbige Beschichtungsmaterialien umgerüstet werden, so ist dies mit einem hohen Arbeitsaufwand verbunden.

Ausgehend von diesem Stand der Technik liegt der Erfindung das Problem zugrunde, eine Vorrichtung zum Aufbringen eines Beschichtungsmaterials auf eine optische Faser anzugeben, bei der ein schneller Wechsel des Beschichtungsmaterials ohne aufwendige Umbau- und Reinigungsarbeiten möglich ist.

Dieses Problem wird durch die Erfindung gelöst, indem die Vorrichtung eine Mehrzahl von Zuführungen für unterschiedliche Beschichtungsmaterialien aufweist und zwischen jeweils einer der Zuführungen und dem zumindest einen Einlaßkanal eine Verbindung herstellbar ist.

Die durch die Erfindung erzielbaren Vorteile bestehen insbesondere darin, daß ein schneller Wechsel des Beschichtungsmaterials ohne aufwendige Umbau- und Reinigungsarbeiten möglich ist, indem in Abhängigkeit von dem gewünschten Beschichtungsmaterial die jeweilige Zuführung über den Einlaßkanal oder die Einlaßkanäle mit der Beschichtungskammer in Verbindung gebracht wird. Die anderen Zuführungen der Vorrichtung sind dabei verschlossen, so daß kein anderes Beschichtungsmaterial in die Beschichtungskammer gelangen kann. Die Vorrichtung ist daher insbesondere dann von Vorteil, wenn in einer Fertigungslinie verschiedenfarbige Beschichtungsmaterialien auf optische Fasern aufgebracht werden sollen. Darüber hinaus wird durch die erfindungsgemäße Vorrichtung der für die Aufbringung der Beschichtung auf die optische Faser in der Fertigungslinie erforderliche Platzbedarf reduziert. Zudem ist eine zentrale Versorgung einer Mehrzahl von Fertigungslinien mit verschiedenfarbigen Beschichtungsmaterialien aus einem zentralen Vorrat möglich. Die erfindungsgemäße Vorrichtung ist einfach und kostengünstig herstellbar und flexibel einsetzbar.

Durch die in den Unteransprüchen aufgeführten Merkmale sind vorteilhafte Weiterbildungen und Verbesserungen der Erfindung möglich.

Für ein einfaches Herstellen und Abschließen der Verbindung zwischen dem zumindest einen mit der Beschichtungskammer in Verbindung stehenden Einlaßkanal und den Zuführungen für die Beschichtungsmaterialien ist es von Vorteil, wenn der Einlaßkanal gegenüber den Zuführungen verschiebbar oder verdrehbar ist.

Dabei ist es von Vorteil, wenn der Einlaßkanal in dem Düsenhalter vorgesehen ist und der Düsenhalter in der Vorrichtung verschiebbar oder verdrehbar angeordnet ist, so daß sich ein besonders einfacher Aufbau der erfindungsgemäßen Vorrichtung ergibt.

Aus den gleichen Gründen ist es ebenfalls vorteilhaft, wenn zwischen den Zuführungen und dem zumindest einen Einlaßkanal ein Schieberteil zum Herstellen einer Verbindung zwischen jeweils einer der Zuführungen und dem Einlaßkanal vorgesehen ist und dieses Schieberteil verschiebbar oder verdrehbar ist. Auf diese Weise ist ein besonders exaktes und flüssigkeitsdichtes Herstellen oder Abschließen von Verbindungen zwischen den Zuführungen und dem Einlaßkanal möglich.

Vorteilhaft ist es, wenn die Zuführungen für die Beschichtungsmaterialien mit einem zentralen Versorgungssystem in Verbindung stehen. Ein solches zentrales Versorgungssystem ermöglicht es, einer Mehrzahl von erfindungsgemäßen Beschichtungsvorrichtungen Beschichtungsmaterialien unterschiedlicher Farbe zuzuführen und auf diese Weise den Aufbau eines mehrere Faserherstellinien umfassenden Beschichtungssystems zu vereinfachen.

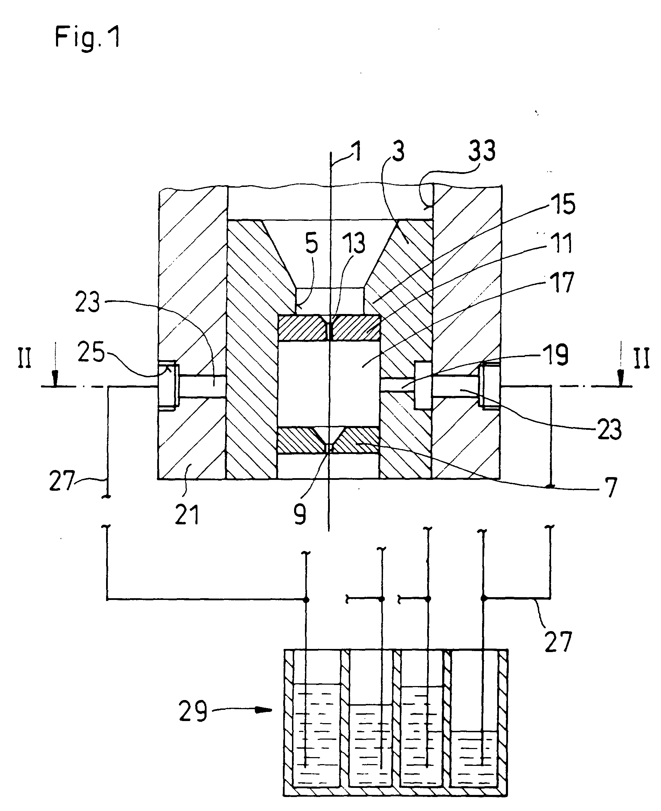

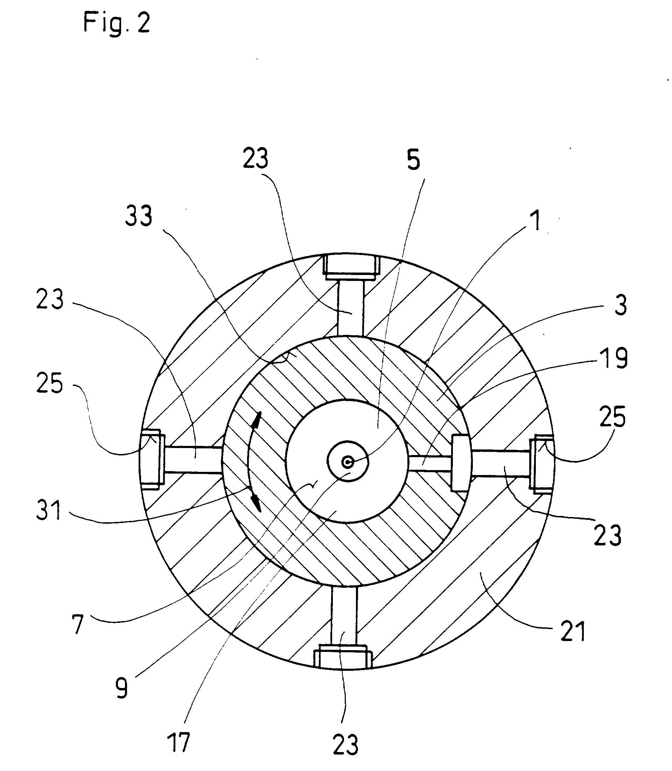

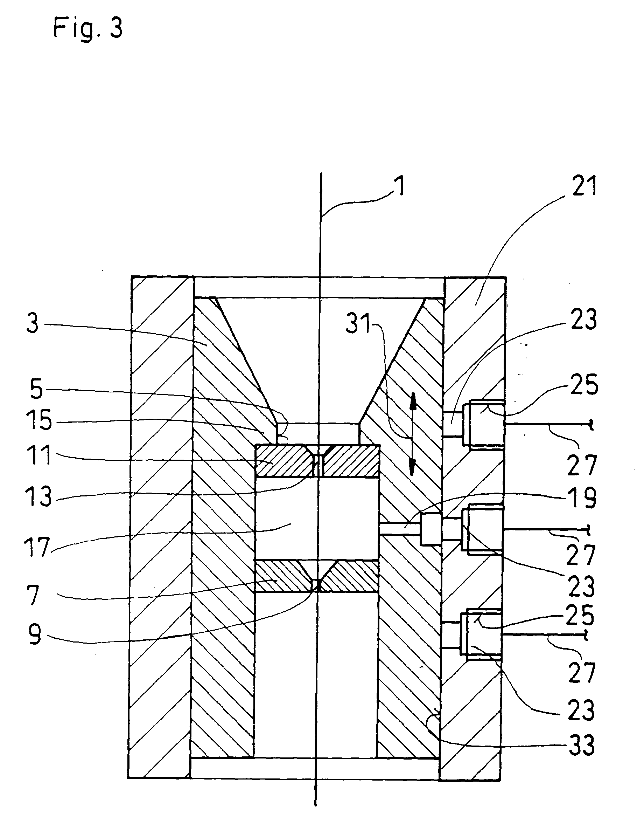

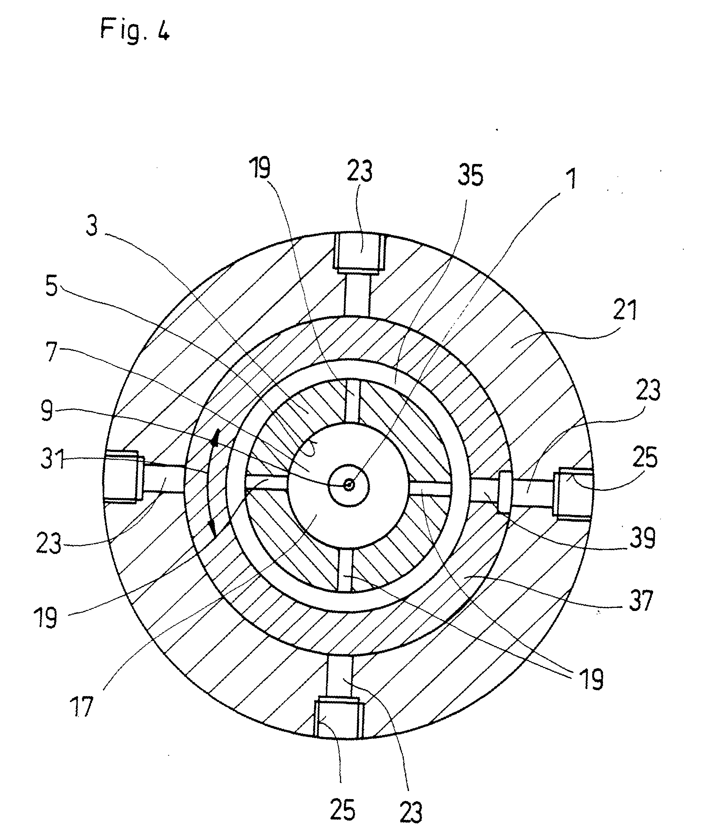

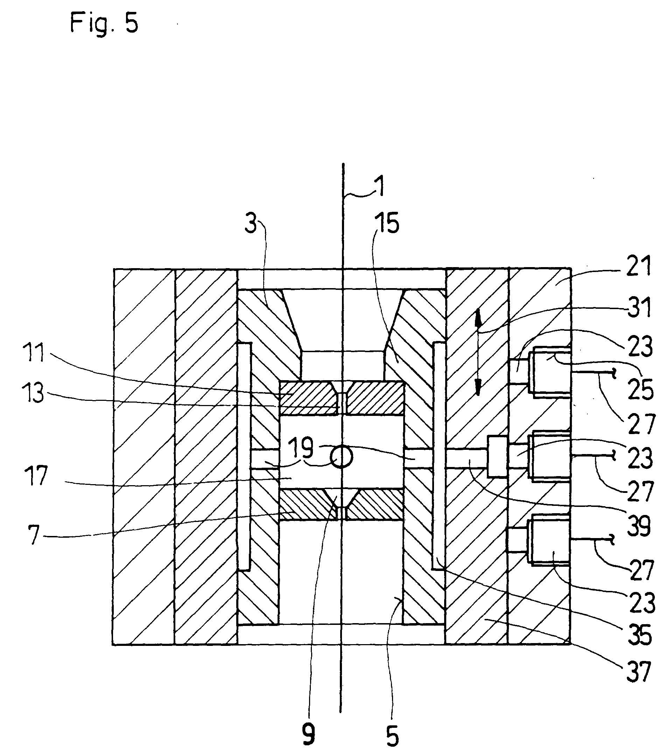

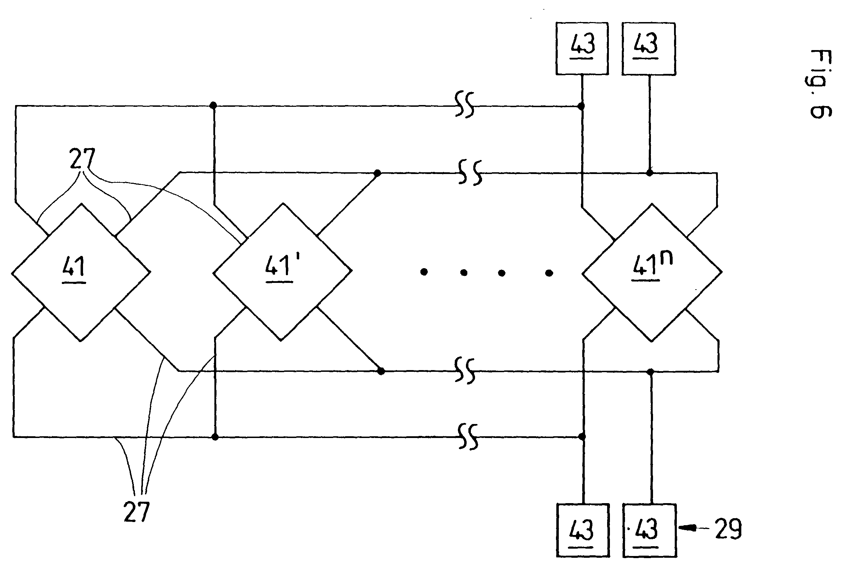

Ausführungsbeispiele der Erfindung sind in der Zeichnung vereinfacht dargestellt und in der nachfolgenden Beschreibung näher erläutert. Es zeigen die Fig. 1 ein erstes erfindungsgemäßes Ausführungsbeispiel einer Vorrichtung zum Aufbringen eines Beschichtungsmaterials auf eine optische Faser, die Fig. 2 einen Schnitt entlang der Linie II-II in Fig. 1, die Fig. 3 ein zweites erfindungsgemäßes Ausführungsbeispiel, die Fig. 4 ein drittes erfindungsgemäßes Ausführungsbeispiel, die Fig. 5 ein viertes erfindungsgemäßes Ausführungsbeispiel sowie die Fig. 6 in symbolhafter Darstellung mehrere parallel zueinander angeordnete Vorrichtungen zum Aufbringen eines Beschichtungsmaterials mit einem zentralen Versorgungssystem.

Die in den Fig. 1 und 2 beispielhaft dargestellte Vorrichtung zum Aufbringen eines Beschichtungsmaterials auf eine optische Faser 1 hat einen z. B. einen kreisringförmigen Querschnitt aufweisenden Düsenhalter 3 mit einer abgestuften Längsbohrung 5. In dieser Längsbohrung 5 ist an ihrem dem Eintritt der Faser in die Vorrichtung abgewandten Ende eine Beschichtungsdüse 7 angeordnet, die eine Durchgangsbohrung 9 hat. Dem Eintritt der optischen Faser 1 in die Vorrichtung zugewandt ist bei diesem Ausführungsbeispiel in der Längsbohrung 5 des Düsenhalters 3 eine Einlaufdüse 11 mit einer Durchgangsbohrung 13 vorgesehen, die sich der Beschichtungsdüse 7 abgewandt an einem in radialer Richtung nach innen erstreckenden Absatz 15 der gestuften Längsbohrung 5 abstützt. In der Längsbohrung 5 ist zwischen der Einlaufdüse 11 und der Beschichtungsdüse 7 eine mit Beschichtungsmaterial gefüllte Beschichtungskammer 17 ausgebildet, durch die die optische Faser 1 hindurchgeführt wird. Dabei wird auf die optische Faser 1 das Beschichtungsmaterial aufgebracht. An der Beschichtungsdüse 7 wird überschüssiges Beschichtungsmaterial von der optischen Faser 1 abgestreift, wobei der Durchmesser der Durchgangsbohrung 9 der Beschichtungsdüse 7 die Wanddicke der auf die optische Faser 1 aufgebrachten Beschichtung bestimmt. Die Durchgangsbohrung 13 der Einlaufdüse 11 weist nur einen geringfügig größeren Durchmesser als die unbeschichtete optische Faser 1 auf, so daß von der optischen Faser mitgeführte Raumluft oder Partikel abgestreift werden und die optische Faser 1 zentriert wird.

In dem Düsenhalter 3 ist z. B. ein sich in radialer Richtung durch die Wandung des Düsenhalters hindurch erstreckender Einlaßkanal 19 ausgebildet, der an seinem einen Ende mit der Beschichtungskammer 17 in Verbindung steht. Der beispielsweise gestufte Einlaßkanal 19 weist an dem Umfang des Düsenhalters 3 seinen größten Durchmesser auf.

Der Düsenhalter 3 ist von einem Gehäuseteil 21 umgeben, in dem z. B. vier sich durch die Wandung des Gehäuseteils 21 in radialer Richtung hindurch erstreckende, mit dem Einlaßkanal 19 verbindbare Zuführungen 23 zur Versorgung der Vorrichtung mit verschiedenfarbigen Beschichtungsmaterialien vorgesehen sind. Die Zuführungen 23 sind beispielsweise in Durchlaufrichtung der optischen Faser 1 durch die Vorrichtung gesehen in gleicher Höhe wie der Einlaßkanal 19 und gleichmäßig über den Umfang des Gehäuseteils 21 verteilt ausgebildet. An ihrem äußeren Ende am Umfang des Gehäuseteils 21 weisen die Zuführungen 23 jeweils einen Gewindeabschnitt 25 zum Herstellen einer Verbindung mit einer Zuleitung 27 auf. Die Zuleitungen 27 sind ihrerseits mit einem zentralen Versorgungssystem 29 verbunden, das beispielsweise vier verschiedenfarbige Beschichtungsmaterialien getrennt voneinander aufnehmen kann und sich zur Versorgung mehrerer parallel zueinander angeordneter Vorrichtungen mit den verschiedenen Beschichtungsmaterialien eignet.

Wie in der Fig. 2, die einen Schnitt entlang der Linie II-II in Fig. 1 zeigt, durch den Pfeil 31 angedeutet ist, ist der Düsenhalter 3 mit der Beschichtungsdüse 7 und der Einlaufdüse 11 in einer Zylinderbohrung 33 des Gehäuseteils 21 verdrehbar angeordnet. Durch ein Verdrehen des den Einlaßkanal 19 aufweisenden Düsenhalters 3 kann eine Überdeckung von Einlaßkanal 19 und einer der in der gleichen Ebene liegenden Zuführungen 23 des Gehäuseteils 21 geschaffen und auf diese Weise mittels des mit der Zuführung 23 fluchtenden Einlaßkanals 19 eine Verbindung zwischen der Zuführung 23 und der Beschichtungskammer 17 hergestellt werden. Das Beschichtungsmaterial in der gewünschten Farbe läßt sich so aus dem entsprechenden Vorrat des zentralen Versorgungssystems 29 in die Beschichtungskammer 17 zuführen, durch welche die optische Faser 1 hindurchgeführt wird. Bei der dargestellten Vorrichtung steht immer nur eine der Zuführungen 23 mit der Beschichtungskammer 17 in Verbindung, während die anderen Zuführungen 23 durch den Düsenhalter 3 verschlossen sind.

Das in der Fig. 3 dargestellte zweite erfindungsgemäße Ausführungsbeispiel unterscheidet sich von dem in den Fig. 1 und 2 dargestellten ersten Ausführungsbeispiel im wesentlichen lediglich dadurch, daß der Düsenhalter 3 mit der darin zwischen der Einlaufdüse 11 und der Beschichtungsdüse 7 gebildeten Beschichtungskammer 17 in Längsrichtung der Vorrichtung, also parallel zu der durchlaufenden optischen Faser 1, in der Zylinderbohrung 33 des Gehäuseteils 21 verschiebbar ist. Das Gehäuseteil 21 hat beispielsweise drei durch die Wandung des Gehäuseteils hindurchgehende Zuführungen 23, die in Durchlaufrichtung der optischen Faser 1, also in Längsrichtung der Vorrichtung, übereinander liegend ausgebildet sind. Jede dieser drei Zuführungen 23 dient zur Versorgung der Beschichtungskammer 17 mit einem Beschichtungsmaterial unterschiedlicher Farbe und ist beispielsweise über Zuleitungen 27 mit einem zentralen Versorgungssystem verbunden. Durch Verschieben des Düsenhalters 3 in der Zylinderbohrung 33 des Gehäuseteils 21 in Richtung des Pfeiles 31 und das entsprechende Verschieben des Einlaßkanals 19 in dieser Richtung läßt sich eine Verbindung zwischen einer der mit dem zentralen Vorratssystem verbundenen Zuführungen 23 und der Beschichtungskammer 17 mittels des mit der Zuführung fluchtenden Einlaßkanals 19 herstellen und das gewünschte Beschichtungsmaterial in die Beschichtungskammer zuführen. Die beiden anderen Zuführungen 23 sind dabei durch den Düsenhalter 3 verschlossen.

Bei dem in der Fig. 4 dargestellten dritten erfindungsgemäßen Ausführungsbeispiel sind in dem Düsenhalter 3 beispielsweise vier mit der Beschichtungskammer 17 in Verbindung stehende Beschichtungskammer 17 in Verbindung stehende Einlaßkanäle 19 in einer gemeinsamen, senkrecht zur Durchlaufrichtung der optischen Faser 1 liegenden Ebene ausgebildet, wobei die Einlaßkanäle 19 gleichmäßig über den Umfang des Düsenhalters 3 verteilt sind. An dem Umfang des Düsenhalters 3 ist in der Ebene der Einlaßkanäle 19 eine umlaufende Ringnut 35 ausgebildet, die eine Verbindung zwischen den vier Einlaßkanälen 19 herstellt und auf diese Weise eine gleichmäßige Zufuhr des jeweiligen Beschichtungsmaterials in die Beschichtungskammer 17 ermöglicht. Der Düsenhalter 3 ist von einem gegenüber dem Düsenhalter verdrehbaren, einen kreisringförmigen Querschnitt aufweisenden Schieber 37 umgeben. Der Schieber 37 weist eine mit der am Umfang des Düsenhalters 3 gebildeten Ringnut 35 in Verbindung stehende Schieberbohrung 39 auf, die sich in radialer Richtung durch die Wandung des Schiebers 37 hindurch erstreckt. Der verdrehbare Schieber 37 ist seinerseits von dem Gehäuseteil 21 umgeben, das in der Ebene der Einlaßkanäle 19 wie bei dem in den Fig. 1 und 2 dargestellten ersten Ausführungsbeispiel z. B. vier gleichmäßig über den Umfang des Gehäuseteils 21 verteilte, in radialer Richtung durch die Wandung des Gehäuseteils 21 hindurch verlaufende Zuführungen 23 zur Zufuhr von Beschichtungsmaterial in die Beschichtungskammer 17 aufweist. Durch Drehen des Schiebers 37, wie durch den Pfeil 31 angedeutet ist, kann mittels der Schieberbohrung 39 eine Verbindung zwischen jeweils einer der Zuführungen 23 und der Beschichtungskammer 17 hergestellt werden, wobei das gewünschte Beschichtungsmaterial durch die mit der betreffenden Zuführung 23 fluchtende Schieberbohrung 39, die Ringnut 35 sowie die vier Einlaßkanäle 19 des Düsenhalters 3 in die Beschichtungskammer 17 gelangt. Die anderen Zuführungen 23 sind dabei durch den Schieber 37 verschlossen, so daß kein anderes Beschichtungsmaterial in die Beschichtungskammer 17 gelangen kann. Im übrigen entspricht dieses Ausführungsbeispiel im wesentlichen dem in den Fig. 1 und 2 dargestellten ersten erfindungsgemäßen Ausführungsbeispiel.

Bei dem in der Fig. 5 dargestellten vierten erfindungsgemäßen Ausführungsbeispiel ist ebenfalls zwischen dem Düsenhalter 3 und dem Gehäuseteil 21 ein ringförmiger Schieber 37 angeordnet, der in Längsrichtung der Vorrichtung parallel zur optischen Faser 1 in der Zylinderbohrung 33 des Gehäuseteils 21 in Richtung des Pfeiles 31 verschiebbar ist. Dieser Schieber 37 weist eine durch seine Wandung in radialer Richtung hindurchgehende Schieberbohrung 39 auf, die mit einer am Umfang des Düsenhalters 3 ausgebildeten, verhältnismäßig breiten Ringnut 35 in Verbindung steht. Durch die Wandung des Düsenhalters 3 erstrecken sich beispielsweise vier in einer Ebene senkrecht zur optischen Faser 1 liegende Einlaßkanäle 19, die an ihrem einen Ende mit der zwischen der Einlaufdüse 11 und der Beschichtungsdüse 7 gebildeten Beschichtungskammer 17 und an ihrem anderen Ende mit der Ringnut 35 des Düsenhalters 3 in Verbindung stehen. Wie bei dem in der Fig. 3 dargestellten zweiten Ausführungsbeispiel sind in dem Gehäuseteil 21 drei in Durchlaufrichtung der optischen Faser 1 übereinander angeordnete Zuführungen 23 zur Zufuhr von z. B. verschiedenfarbigem Beschichtungsmaterial ausgebildet. Durch ein entsprechendes Verschieben des Schiebers 37 in Richtung des Pfeiles 31, also parallel zur Durchlaufrichtung der optischen Faser 1, kann eine Verbindung zwischen der gewünschten Zuführung 23 und der am Umfang des Düsenhalters 3 ausgebildeten Ringnut 35 mittels der mit der Zuführung fluchtenden Schieberbohrung 39 hergestellt werden, wobei die anderen Zuführungen 23 durch den Schieber 37 verschlossen sind. Durch ein einfaches Verschieben des Schiebers 37 und eine Überdeckung der Schieberbohrung 39 mit einer anderen Zuführung 23 ist auf einfache Art und Weise ein Wechsel des Beschichtungsmaterials möglich.

Die Fig. 6 zeigt in symbolhafter, stark vereinfachter Darstellung eine Anlage mit mehreren erfindungsgemäßen Vorrichtungen 41, 41', 41ⁿ zum Aufbringen von Beschichtungsmaterialien auf optische Fasern. Die Zuleitungen 27 der Vorrichtungen 41, 41', 41ⁿ sind derart miteinander verbunden, daß jede der Vorrichtungen mit den benötigten Beschichtungsmaterialien aus einem zentralen Versorgungssystem 29, das jeweils einen Vorratsbehälter 43 für jedes der verschiedenfarbigen Beschichtungsmaterialien aufweist, versorgt werden kann.

## Patentansprüche

1. Vorrichtung zum Aufbringen eines Beschichtungsmaterials auf eine optische Faser mit einem Düsenhalter, einer in dem Düsenhalter angeordneten Beschichtungsdüse, einer in Durchlaufrichtung der Faser vor der Beschichtungsdüse vorgesehenen Beschichtungskammer sowie zumindest einem mit der Beschichtungskammer in Verbindung stehenden Einlaßkanal für ein Beschichtungsmaterial, dadurch gekennzeichnet, daß die Vorrichtung eine Mehrzahl von Zuführungen (23) für unterschiedliche Beschichtungsmaterialien aufweist, und daß zwischen jeweils einer der Zuführungen (23) und dem zumindest einen Einlaßkanal (19) eine Verbindung herstellbar ist.

2. Vorrichtung nach Anspruch 1, dadurch gekennzeichnet, daß der Einlaßkanal (19) gegenüber den Zuführungen (23) verschiebbar ist.

3. Vorrichtung nach Anspruch 1, dadurch gekennzeichnet, daß der Einlaßkanal (19) gegenüber den Zuführungen (23) verdrehbar ist.

4. Vorrichtung nach Anspruch 1 oder 2, dadurch gekennzeichnet, daß der Einlaßkanal (19) in dem Düsenhalter (3) vorgesehen und der Düsenhalter (3) in der Vorrichtung verschiebbar angeordnet ist.

5. Vorrichtung nach Anspruch 1 oder 3, dadurch gekennzeichnet, daß der Einlaßkanal (19) in dem Düsenhalter (3) vorgesehen und der Düsenhalter (3) in der Vorrichtung verdrehbar angeordnet ist.

6. Vorrichtung nach einem der Ansprüche 1 bis 3, dadurch gekennzeichnet, daß zwischen den Zuführungen (23) und dem Einlaßkanal (19) ein Schieberteil (37) zum Herstellen einer Verbindung zwischen jeweils einer der Zuführungen (23) und dem Einlaßkanal (19) vorgesehen ist.

7. Vorrichtung nach Anspruch 6, dadurch gekennzeichnet, daß das Schieberteil (37) verschiebbar ist.

8. Vorrichtung nach Anspruch 6, dadurch gekennzeichnet, daß das Schieberteil (37) verdrehbar ist.

9. Vorrichtung nach einem der Ansprüche 1 bis 8, dadurch gekennzeichnet, daß die Zuführungen (23) für die Beschichtungsmaterialien mit einem zentralen Versorgungssystem (29) in Verbindung stehen.

10. Vorrichtung nach einem der Ansprüche 1 bis 9, dadurch gekennzeichnet, daß die Beschichtungsmaterialien verschiedene Farben aufweisen.

## Claims

1. Device for applying a coating material to an optical fibre, comprising a nozzle holder, a coating nozzle disposed in the nozzle holder, a coating chamber provided upstream of the coating nozzle in the direction of travel of the fibre and at least one inlet channel, connected to the coating chamber, for a coating material, characterized in that the device has a plurality of feed pipes (23) for different coating materials, and in that a connection can be made between each of the feed pipes (23) and the at least one inlet channel (19).

2. Device according to Claim 1, characterized in that the inlet channel (19) can be displaced with respect to the feed pipes (23).

3. Device according to Claim 1, characterized in that the inlet channel (19) can be rotated with respect to the feed pipes (23).

4. Device according to Claim 1 or 2, characterized in that the inlet channel (19) is provided in the nozzle holder (3) and the nozzle holder (3) is disposed displaceably in the device.

5. Device according to Claim 1 or 3, characterized in that the inlet channel (19) is provided in the nozzle holder (3) and the nozzle holder (3) is disposed rotatably in the device.

6. Device according to one of Claims 1 to 3, characterized in that a slider part (37) is provided between the feed pipes (23) and the inlet channel (19) to make a connection between each of the feed pipes (23) and the inlet channel (19).

7. Device according to Claim 6, characterized in that the slider part (37) is displaceable.

8. Device according to Claim 6, characterized in that the slider part (37) is rotatable.

9. Device according to one of Claims 1 to 8, characterized in that the feed pipes (23) for the coating materials are connected to a central supply system (29).

10. Device according to one of Claims 1 to 9, characterized in that the coating materials have different colours.

## Revendications

1. Dispositif pour l'application d'un matériau de revêtement sur une fibre optique avec un support de buse, une buse de revêtement disposée dans le support de buse, une chambre de revêtement disposée devant la buse de revêtement en direction de passage de la fibre et au moins un canal d'entrée pour un matériau de revêtement qui est relié à la chambre de revêtement, caractérisé en ce que le dispositif comprend une pluralité d'arrivées (23) pour différents matériaux de revêtement et en ce qu'une liaison est réalisable entre respectivement une des arrivées (23) et le au moins un canal d'entrée (19).

2. Dispositif selon la revendication 1, caractérisé en ce que le canal d'entrée (19) peut être déplacé par rapport aux arrivées (23).

3. Dispositif selon la revendication 1, caractérisé en ce que le canal d'entrée (19) peut être tourné par rapport aux arrivées (23).

4. Dispositif selon la revendication 1 ou 2, caractérisé en ce que le canal d'entrée (19) est prévu dans le support de buse (3) et en ce que le support de buse (3) est placé dans le dispositif de manière à pouvoir être déplacé.

5. Dispositif selon la revendication 1 ou 3, caractérisé en ce que le canal d'entrée (19) est prévu dans le support de buse (3) et en ce que le support de buse (3) est placé dans le dispositif de manière à pouvoir être tourné.

6. Dispositif selon l'une des revendications 1 à 3, caractérisé en ce qu'entre les arrivées (23) et le canal d'entrée (19) est prévu un tiroir (37) pour réaliser une liaison entre respectivement une des arrivées (23) et le canal d'entrée (19).

7. Dispositif selon la revendication 6, caractérisé en ce que le tiroir (37) peut être déplacé.

8. Dispositif selon la revendication 6, caractérisé en ce que le tiroir (37) peut être tourné.

9. Dispositif selon l'une des revendications 1 à 8, caractérisé en ce que les arrivées (23) pour les matériaux de revêtement sont en liaison avec un système d'alimentation centralisé (29).

10. Dispositif selon l'une des revendications 1 à 9, caractérisé en ce que les matériaux de revêtement ont des couleurs différentes.
